# EUROPEAN PATENT SPECIFICATION

(11) **EP 2 625 991 B1**
(45) Date of publication and mention of the grant of the patent: **21.09.2016**
(21) Application number: 12171745.8
(22) Date of filing: 13.06.2012
(51) Int. Cl.: A47J 43/046, A47J 43/07

(54) **Food processor with recirculation of foodstuff**
Küchenmixer mit Rezirkulation der Nahrungsmittel
Robot ménager avec recirculation des aliments

(30) Priority: 13.02.2012 TW 101202549 U; 14.03.2012 TW 101204584 U
(43) Date of publication of application: 14.08.2013
(73) Proprietor: Lin, Wei-Chih, New Taipei City 220 (TW)
(72) Inventor: Lin, Wei-Chih, New Taipei City 220 (TW)
(74) Representative: Banse & Steglich

(56) References cited:
- TW-U- M 408 329
- US-A- 3 420 456
- US-A- 5 795 062

## Description

### BACKGROUND OF THE INVENTION

### Field of Invention

The present invention relates to a processor, and more particularly to a circulating processor which may perform repeated mashing treatment on food, vegetables and fruits.

### Related Art

With the progress of the times, especially the development of industry and commerce and the high development of earth, people need much more energy for their work, and yet get less and less physical exercises. As a result, they gradually feel degradation of their body functions that threats their health. The importance of exercise, hence are not only deeply recognized, but the demand for healthy diets becomes increasingly higher.

In terms of diet, nutritional balance is very important. In view of this, there have been various processors for vegetables, fruits and bean food, which are used to grind the food, vegetables and fruits and squeeze juice, in order that people can obtain nutritious supplements from them quickly. However, the principle of a common processor is to have food chopped and blended by cutting knives rotating at a high speed as driven by a carbon brush motor. In this case, high speed cutting requires high power consumption and introduces great noise, and after high speed cutting, nutrition in the food are rapidly oxidized and thereby lost; and after grinding, fibers, peels and seeds of the food cannot be easily decomposed into water-soluble fibers for being swallowed and absorbed by human bodies.

If the rotating speed of the processor is lowered, the above problems may be overcome, but the food, vegetables and fruits cannot be ground thoroughly. Therefore, a processor using upper and lower grinding pans that are opposite to each other to grind food, vegetables and fruits at a low speed has been provided. However, if the food, vegetables and fruits are processed by grinding only, the processing speed is relatively slow.

If the cutting knives and the grinding pans are assembled on the same processor, and the rotating speed of the motor is lowered, cutting and grinding may be performed sequentially, but as cutting and grinding are performed only once, the particles of the food, vegetables and fruits obtained after grinding are still too large to be absorbed by human bodies rapidly. If the juice of the food, vegetables and fruits after grinding is poured out and then cut and ground for another time, the particles and fibers of the food, vegetables and fruits can be made finer, but a lot of time is wasted and the nutrients are easily lost.

Document US 3. 420.456 A discloses an industrial mixer and a comminuting pump. The twisting force produced by the rotation of impeller blades of the comminuting pump is used to pressurize the fluid.

Furthermore, the document US 5,795,062 A discloses a milkshake machine and impellers or pedals on the bottom surface of an impeller disc. By means of plural rotating blades horizontal pressure is provided to make the fluid flow.

Document TW M408329 discloses a circulating processor with a base having an operating motor and a container disposed above the base. A cutlery is provided connected to the operating motor for rotating to mash food, vegetables and fruits placed inside the container.

In view of the above, in order to alleviate the aforementioned disadvantages, and provide a circulating processor having a structure different from conventional processors and capable of performing repeated mashing treatment on food, vegetables and fruits to increase the efficiency and make particles and fibers of the mashed food, vegetables and fruits finer for being easily absorbed by human bodies, the present invention is made by the inventor through years of experience and continuous research, development and improvement.

### SUMMARY OF THE INVENTION

An object of the present invention is to provide a circulating processor, which can perform repeated mashing treatment on food, vegetables and fruits, to improve the mashing efficiency.

Another object of the present invention is to provide a circulating processor, which can perform repeated cutting and grinding on food, vegetables and fruits, to improve the cutting and grinding efficiency, and to make the fibers of the ground food, vegetables and fruits finer for being easily absorbed by human bodies.

In order to achieve the above objects, the present invention provides a circulating processor, which includes a base, a container, a cutlery and a pressurizing mechanism. An operating motor is disposed in the base, and a mandrel is disposed in the operating motor; the container is disposed above the base, a space is formed on a bottom part of the container, a reflux opening is formed on an upper half part of the container, and the reflux opening is in communication with the space of the bottom part of the container; the cutlery is positioned on the bottom part of the container, connected to the mandrel of the operating motor, and used for rotating to mash food, vegetables and fruits placed inside the container; and the pressurizing mechanism is in communication with the space of the bottom part of the container, and used for pressurizing to transfer the mashed food, vegetables and fruits into the container via the reflux opening of the upper half part of the container, so as to perform circulating mashing treatment.

In implementation, the cutlery includes a cutting blade, a first millstone and a second millstone corresponding to the first millstone, the cutting blade, the second millstone and the mandrel are coaxially connected, and the cutting blade protrudes above the second millstone.

In implementation, the first millstone is annular-shaped, the first millstone is fixed to the bottom part of the container, a plurality of lower grinding teeth is disposed on an annular bottom surface of the first millstone, and a plurality of upper grinding teeth is disposed on a top surface of the second millstone corresponding to the plurality of lower grinding teeth.

In implementation, a handle is disposed on a side of the container, a channel is formed inside the handle, a top end of the channel is connected to the reflux opening of the upper half part of the container, and a bottom end of the channel is connected to the space of the bottom part of the container.

In implementation, a flow control valve is disposed on a side of the bottom part of the container, and the flow control valve is in communication with the space of the bottom part of the container, and used for controlling the space to be in communication with or separated from the outside of the container.

In implementation, the pressurizing mechanism is an upper conical plate formed below the cutlery and protruding downwards.

In implementation, the pressurizing mechanism further includes a lower conical plate located below the upper conical plate, and a space with a conical section is formed between a conical surface of the lower conical plate and a conical surface of the upper conical plate.

The following detailed description, given by way of examples or embodiments, will best be understood in conjunction with the accompanying drawings.

### BRIEF DESCRIPTION OF THE DRAWINGS

FIG. 1 is an assembled sectional view of a preferred embodiment of the present invention.
FIG. 2 is a using state diagram of the present invention.

### DETAILED DESCRIPTION OF THE INVENTION

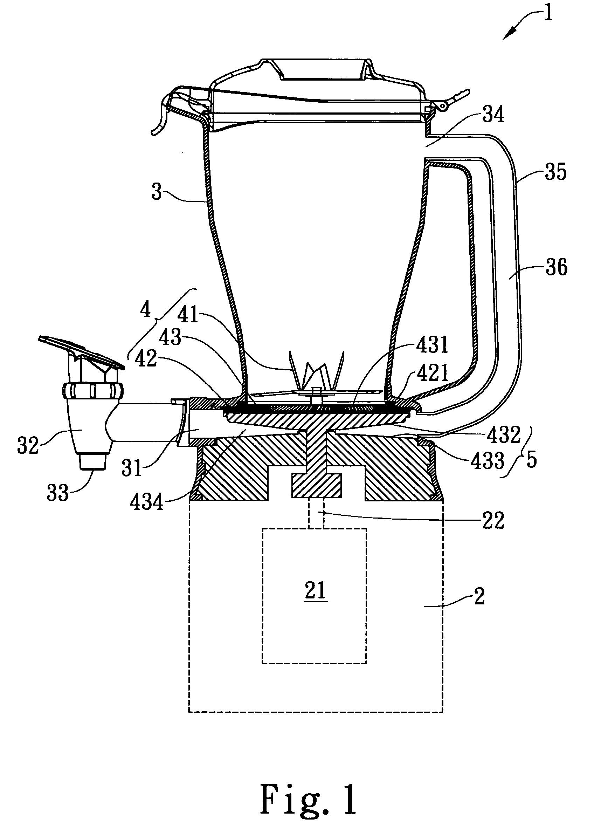

FIG. 1 shows a preferred embodiment of a circulating processor 1 of the present invention, which includes a base 2, a container 3, a cutlery 4 and a pressurizing mechanism 5.

The base 2 is substantially cylinder-shaped, having an operating motor 21 disposed therein, a mandrel 22 is disposed inside the operating motor 21, and a top end of the mandrel 22 protrudes upwards from a top part of the operating motor 21. In the implementation, the operating motor 21 is preferably a carbon-brush-free induction servo motor with a rotating speed lower than 6000 rpm, to drive the mandrel 22 to rotate at a low speed.

The container 3 is disposed above the base 2, a space 31 is formed on a bottom part of the container 3, a flow control valve 32 is disposed on a side of the bottom part of the container 3, the flow control valve 32 is in communication with the space 31 of the bottom part of the container 3, and a juice outlet 33 is disposed on the flow control valve 32. A reflux opening 34 is formed on an upper half part of the container 3, a handle 35 is disposed on a side of the container 3, a channel 36 is formed inside the handle 35, a top end of the channel 36 is connected to the reflux opening 34 of the upper half part of the container 3, and a bottom end of the channel 36 is connected to the space 31 of the bottom part of the container 3, so that the reflux opening 34 is in communication with the space 31 of the bottom part of the container 3.

The cutlery 4 is positioned on the bottom part of the container 3, connected to the mandrel 22 of the operating motor 21, and used for rotating to mash food, vegetables and fruits placed inside the container 3. In the implementation, the cutlery 4 may be an independent blade group for cutting, or an independent millstone group for grinding. In this embodiment, the cutlery 4 preferably includes a cutting blade 41, a first millstone 42 and a second millstone 43. The cutting blade 42 and the second millstone 43 positioned in a top-down sequence are coaxially connected to the mandrel 22, and the cutting blade 41 protrudes above the second millstone 43. The first millstone 42 is annular-shaped, and fixed to the bottom part of the container 3, and an annular bottom surface of the first millstone 42 faces the space 31 of the bottom part of the container 3, and has a plurality of lower grinding teeth 421 disposed thereon. The second millstone 43 is disk-shaped, and a plurality of upper grinding teeth 431 is disposed on a peripheral top surface of the second millstone 43 corresponding to the plurality of lower grinding teeth 421.

In addition, a bottom part of the second millstone 43 forms an upper conical plate 432 protruding downwards, a lower conical plate 433 is disposed below the upper conical plate 432, the upper and lower conical plates (432, 433) are located inside the space 31 of the bottom part of the container 3, and a space 434 with a conical section is formed between a conical surface of the lower conical plate 433 and a conical surface of the upper conical plate 432. The upper conical plate 432 and the lower conical plate 433 jointly form a pressurizing mechanism 5.

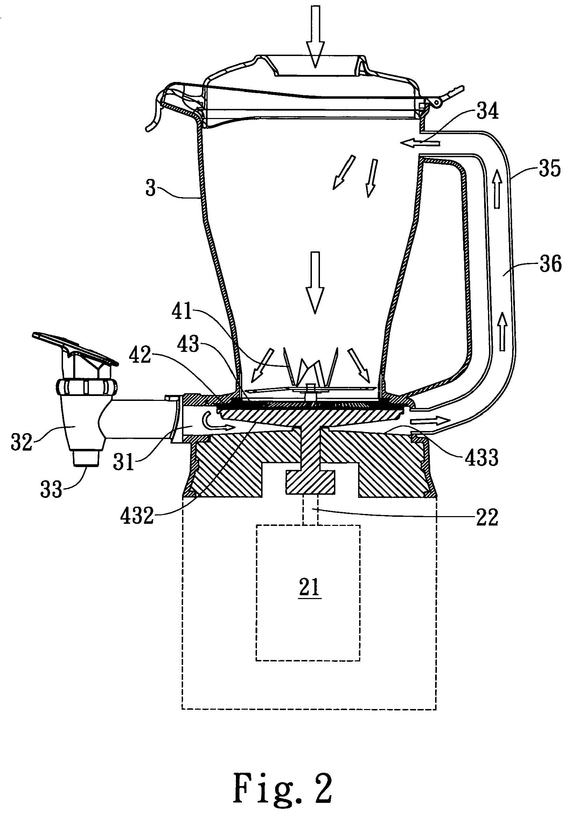

Thereby, as shown in FIG. 2, when a user places food, vegetables and fruits in the container 3, and at the same time activates the operating motor 21 to enable the operating motor 21 to start operating, the mandrel 22 of the operating motor 21, the second millstone 43 and the cutting blade 41 rotate synchronously, so that the food, vegetables and fruits in the container 3 are cut by the cutting blade 41, and ground by the first millstone 42 and the second millstone 43; after the flow control valve 32 is opened, juice, particles and fibers of the food, vegetables and fruits flow out downward via the juice outlet 33.

When the flow control valve 32 is closed, the space 31 of the bottom part of the container 3 is in an enclosed state. As the upper conical plate 432 rotates to produce a pressurizing effect together with the lower conical plate 433, the juice, particles and fibers of the food or vegetables and fruits inside the enclosed space 31 of the bottom part of the container 3 may be pressurized, so that the juice, particles and fibers of the food or vegetables and fruits flow upwards through the reflux opening 34 of the upper half part of the container 3 via the channel 36 inside the handle 35, and are mixed with the uncut or cut food, vegetables and fruits inside the container 3, to perform circulating cutting and grinding, to make the particles and fibers of the food, vegetables and fruits finer for being easily absorbed by human bodies.

Therefore, the present invention has the following advantages.
1. The mandrel of the operating motor, the second millstone and the cutting blade of the present invention may rotate synchronously at a low speed, so that the food, vegetables and fruits not only can be cut and ground sequentially, but can also be decomposed into water-soluble fibers, thereby preserving nutrients of the food by preventing oxidization.
2. The mandrel of the operating motor, the second millstone and the cutting blade of the present invention are driven by an induction servo motor with a low rotating speed, the induction servo motor a power consumption of about 80-250 W, and a life of about 20,000 hours, while a conventional carbon brush motor that rotates at a high speed has a power consumption of about 800-1000 W, and a life of about 500 hours. Therefore, the present invention can not only save the energy, avoid the energy waste and increase the service life, but also effectively reduce noises by lowering the rotating speed.
3. Through the present invention, repeated cutting and grinding may be performed on the food, vegetables and fruits, so that not only the cutting and grinding efficiency is increased effectively, but also the particles and fibers of the ground food, vegetables and fruits are made finer for being easily absorbed by human bodies.
4. Through the present invention, the flow control valve may be closed after usage to clean the channel inside the handle and the components, and then the flow control valve may be opened to allow water to flow out after cleaning. Therefore, cleaning can be easily carried out without disassembling the components, so as to effectively save the disassembly and cleaning time.

In view of the above, according to the aforementioned disclosure, the present invention surely can achieve the anticipated objects to provide a circulating processor, which can perform repeated mashing treatment on food, vegetables and fruits to increase the efficiency make the particles and fibers of the mashed food, vegetables and fruits finer for being easily absorbed by human bodies, and can be cleaned easily after usage. It is new and can be put into industrial use.

Although the embodiments of the present invention have been described in detail, many modifications and variations may be made by those skilled in the art from the teachings disclosed hereinabove.

## Claims

1. A circulating processor (1), comprising:
a base (2), having an operating motor (21) disposed therein, wherein a mandrel (22) is disposed in the operating motor (21);
a container (3), disposed above the base (2), wherein a space (31) is formed on a bottom part of the container (3), a reflux opening (34) is formed on an upper half part of the container (3), and the reflux opening (34) is in communication with the space (31) of the bottom part of the container (3);
a cutlery (4), positioned on the bottom part of the container (3), connected to the mandrel (22) of the operating motor (21), for rotating to mash food, vegetables and fruits placed inside the container (3);
**characterized by**
a pressurizing mechanism (5), in communication with the space (31) of the bottom part of the container (3) and for pressurizing to transfer the mashed food, vegetables and fruits into the container (3) via the reflux opening (34) of the upper half part of the container (3), so as to perform circulating mashing treatment, wherein the pressurizing mechanism (5) comprises an upper conical plate (432) formed below the cutlery (4) and protruding downwards and a lower conical plate (433) located below the upper conical plate (432), wherein a space (434) with a conical section is formed between a conical surface of the lower conical plate (433) and a conical surface of the upper conical plate (432).

2. The circulating processor (1) according to claim 1, wherein, the cutlery (4) comprises a cutting blade (41), a first millstone (42) and a second millstone (43) corresponding to the first millstone (42), the cutting blade (41), the second millstone (43) and the mandrel (22) are coaxially connected, and the cutting blade (41) protrudes above the second millstone (43).

3. The circulating processor (1) according to claim 2, wherein, the first millstone (42) is annular-shaped, the first millstone (42) is fixed to the bottom part of the container (3), a plurality of lower grinding teeth (421) is disposed on an annular bottom surface of the first millstone (42), and a plurality of upper grinding teeth (431) is disposed on a top surface of the second millstone (43) corresponding to the plurality of lower grinding teeth (421).

4. The circulating processor (1) according to claim 1, wherein, a handle (35) is disposed on a side of the container (3), a channel is formed inside the handle (35), a top end of the channel is connected to the reflux opening (34) of the upper half part of the container (3), and a bottom end of the channel is connected to the space of the bottom part of the container (3).

## Patentansprüche

1. Zirkulationsgerät (1), umfassend:
eine Basis (2) mit einem darin angeordneten Antriebsmotor (21), wobei eine Welle (22) in dem Antriebsmotor (21) angeordnet ist;
einen Behälter (3), der über der Basis (2) angeordnet ist, wobei eine Kammer (31) an einem unteren Abschnitt des Behälters (3) ausgeformt ist, eine Rücklauföffnung (34) in einer oberen Hälfte des Behälters (3) ausgebildet ist und die Rücklauföffnung (34) in Verbindung mit der Kammer (31) des unteren Abschnitts des Behälters (3) steht;
ein Schneidwerk (4), das in dem unteren Abschnitt des Behälters (3) angeordnet ist, mit der Welle (22) des Antriebsmotors (21) verbunden ist, und zum Rotieren ausgebildet ist, um Lebensmittel, Gemüse und Früchte, die in den Behälter (3) eingebracht werden, zu mischen;
**gekennzeichnet durch**
einen Druckmechanismus (5), der mit der Kammer (31) des unteren Abschnitts des Behälters (3) in Verbindung steht und zum Ausüben eines Drucks zum Transportieren der vermischten Lebensmittel, Gemüse und Früchte in den Behälter (3) über die Rücklauföffnung (34) in der oberen Hälfte des Behälters (3) zu transportieren, um so ein umlaufendes Durchmischen auszuführen, wobei der Druckmechanismus (5) eine obere konische Platte (432), die unter dem Schneidwerk (4) angeordnet ist und nach unten hervorsteht, und eine untere konische Platte (433) umfasst, die unter der oberen konischen Platte (432) angeordnet ist, wobei eine Kammer (434) mit einem konischen Abschnitt zwischen einer konischen Fläche der unteren konischen Platte (433) und einer konischen Fläche der oberen konischen Platte (432) ausgebildet ist.

2. Zirkulationsgerät (1) nach Anspruch 1, wobei das Schneidwerk (4) eine Schneidklinge (41), einen ersten Mahlstein (42) und einen zweiten Mahlstein (43), der dem ersten Mahlstein (42) entspricht, umfasst, wobei die Schneidklinge (41), der zweite Mahlstein (43) und die Welle (22) koaxial miteinander verbunden sind und die Schneidklinge (41) über den zweiten Mahlstein (43) hervorsteht.

3. Zirkulationsgerät (1) nach Anspruch 2, wobei der erste Mahlstein (42) ringförmig ausgebildet ist, wobei der erste Mahlstein (42) mit dem unteren Abschnitt des Behälters (3) befestigt ist, wobei eine Mehrzahl von unteren Zerkleinerungszähnen (421) an einer kreisförmigen unteren Fläche des ersten Mahlsteins (42) angeordnet ist und eine Mehrzahl von oberen Zerkleinerungszähnen (431) an einer oberen Fläche des zweiten Mahlsteins (43), die der Mehrzahl der unteren Zerkleinerungszähne (421) entspricht, angeordnet ist.

4. Zirkulationsgerät (1) nach Anspruch 1, wobei ein Handgriff (35) an einer Seite des Behälters (3) angeordnet ist, wobei ein Kanal im Inneren des Handgriffs (35) ausgebildet ist, wobei ein oberes Ende des Kanals mit der Rücklauföffnung (34) des Abschnitts in der oberen Hälfte des Behälters (3) verbunden ist und ein unteres Ende des Kanals mit der Kammer des unteren Abschnitts des Behälters (3) verbunden ist.

## Revendications

1. Robot à recirculation (1), comprenant :
une base (2), à l'intérieur de laquelle est disposé un moteur de commande (21), un mandrin (22) étant disposé dans le moteur de commande (21) ;
un récipient (3), disposé au-dessus de la base (2), un espace (31) est formé sur une partie inférieure du récipient (3), un orifice de reflux (34) étant formé sur une demi-partie supérieure du récipient (3), et l'orifice de reflux (34) étant en communication avec l'espace (31) de la partie inférieure du récipient (3) ;
un dispositif de coupe (4), positionné sur la partie inférieure du récipient (3), raccordé au mandrin (22) du moteur de commande (21), et destiné à être mis en rotation pour écraser des aliments, des légumes et des fruits placés à l'intérieur du récipient (3) ;
**caractérisé par**
un mécanisme de pressurisation (5), en communication avec l'espace (31) de la partie inférieure du récipient (3) et destiné à effectuer une pressurisation pour transférer les aliments, les légumes et les fruits écrasés jusque dans le récipient (3) via l'orifice de reflux (34) de la demi-partie supérieure du récipient (3), de façon à effectuer un traitement d'écrasement par recirculation, le mécanisme de pressurisation (5) compenant une plaque conique supérieure (432) formée au-dessous du dispositif de découpe (4) et faisant saillie vers le bas et une plaque conique inférieure (433) située au-dessous de la plaque conique supérieure (432), un espace (434) pourvue d'une section conique étant formé entre une surface conique de la plaque conique inférieure (433) et une surface conique de la plaque conique supérieure (432).

2. Robot à recirculation (1) selon la revendication 1, dans lequel le dispositif de découpe (4) comprend une lame coupante (41), une première meule (42) et une seconde meule (43) correspondant à la première meule (42), la lame coupante (41), la seconde meule (43) et le mandrin (22) étant raccordés de manière coaxiale, et la lame coupante (41) faisant saillie au-dessus de la seconde meule (43).

3. Robot à recirculation (1) selon la revendication 2, dans lequel la première meule (42) est de forme annulaire, la première meule (42) est fixée à la partie inférieure du récipient (3), une pluralité de dents de broyage inférieures (421) est disposée sur une surface inférieure annulaire de la première meule (42), et une pluralité de dents de broyage supérieures (431) est disposée sur une surface supérieure de la seconde meule (43) en correspondance de la pluralité des dents de broyage inférieures (421).

4. Robot à recirculation (1) selon la revendication 1, dans lequel une poignée (35) est disposée sur un côté du récipient (3), un conduit est formé à l'intérieur de la poignée (35), une extrémité supérieure du conduit est raccordée à l'orifice de reflux (34) de la demi-partie supérieure du récipient (3), et une extrémité inférieure du conduit est raccordée à l'espace de la partie inférieure du récipient (3).
